# EUROPÄISCHE PATENTSCHRIFT

(11) **EP 2 640 503 B1**
(45) Veröffentlichungstag und Bekanntmachung des Hinweises auf die Patenterteilung: **10.06.2015**
(21) Anmeldenummer: 11781552.2
(22) Anmeldetag: 14.11.2011
(51) Int. Cl.: B01J 2/16

(54) **WIRBELSCHICHTAPPARATUR MIT BODEN ALS VENTILATOR**
FLUIDIZED-BED APPARATUS HAVING BASE AS FAN
APPAREILLAGE À LIT FLUIDISÉ DONT LE FOND SERT DE VENTILATEUR

(30) Priorität: 15.11.2010 DE 102010052312
(43) Veröffentlichungstag der Anmeldung: 25.09.2013
(73) Patentinhaber: Huettlin, Herbert, 79585 Steinen (DE)
(72) Erfinder: Huettlin, Herbert, 79585 Steinen (DE)
(74) Vertreter: Witte, Weller & Partner Patentanwälte mbB
(86) Internationale Anmeldenummer: PCT/EP2011/069998
(87) Internationale Veröffentlichungsnummer: WO 2012/065931

(56) Entgegenhaltungen:
- WO-A1-2006/039933
- US-A- 4 623 098
- US-A1- 2005 145 728

## Beschreibung

Die Erfindung betrifft eine Vorrichtung zum Behandeln von partikelförmigem Gut, mit einem stehenden Behälter, der eine Prozesskammer aufweist, in der ein um eine Hochachse drehbarer Boden angeordnet ist, wobei Prozessluft zwischen einem äußeren Umfang des drehbaren Bodens und der diesen umgebenden Wand des Behälters in die Prozesskammer einführbar ist, sowie mit einer Düse, um einem in der Prozesskammer bewegten Gut ein Behandlungsmedium aufzusprühen.

Derartige Vorrichtungen sind unter der Bezeichnung Rotor-Granulator bekannt, wie sie beispielsweise durch die Firma Glatt GmbH in 79589 Binzen, Deutschland vertrieben werden.

Bei der bekannten Vorrichtung ist das zu behandelnde Gut auf einer rotierenden ebenen Scheibe aufgenommen. Durch die Tangentialkraft wird das Gut radial nach außen bewegt. Die durch den Spalt zwischen dem äußeren Umfang der rotierenden Scheibe und der diese umgebenden Wand des Behälters tritt die Prozessluft von unten nach oben gerichtet in die Prozesskammer hinein. Dabei bewegt diese nach oben strömende Prozessluft das an die Wand geschleuderte Gut nach oben. Die Gutteilchen haben auch eine nach innen gerichtete Bewegungskomponente. Nach einer gewissen Wegstrecke trennen sich Prozessluft und Gutteilchen. Dabei strömt die Prozessluft nach oben in der Apparatur weiter, gegebenenfalls durch Filter um mitgerissene Gutteilchen auszufiltern und anschließend zu einem Auslass.

Die Gutteilchen fallen aufgrund der Schwerkraft auf die rotierende Scheibe zurück, werden dann wieder nach außen bewegt, so dass sich diese in einem Kreislauf bewegen. Aufgrund der Rotationsrichtung der Scheibe wird den Gutteilchen auch noch eine umfängliche Bewegungskomponente auferlegt, so dass das Gut sich insgesamt gesehen in einer toroidal-orbitalen Bahn in der Prozesskammer bewegt. Düsen, die in der Behälterwand stecken oder über dem Gut von oben nach unten sprühen, führen dem bewegten Gut das Behandlungsmedium zu.

Beim Agglomerieren ist dies eine klebrige Flüssigkeit, um aus kleinen, meist feinstäubigen Teilen größere, körnige Aggolomerate zu bilden. Dies wird überwiegend in der pharmazeutischen Industrie durchgeführt.

Beim Coaten wird auf einen vorhandenen Grundkörper, beispielsweise ein Pellet oder eine Tablette, ein Beschichtungsmedium aufgesprüht, um diese Grundkörper zu beschichten.

Die zugeführte Prozessluft dient nicht nur dazu, die Gutteilchen zu bewegen, sondern auch das ausgänglich flüssige Behandlungsmedium zu verfestigen.

Bei der bekannten Apparatur wird die Prozessluft abseits der Apparatur aufbereitet und über geeignete mechanische Gerätschaften, wie Gebläse, beschleunigt und einem sogenannten Windhaus unterhalb des Bodens zugeführt.

Im großtechnischen Einsatz können in solchen Apparaturen Gutmengen im Bereich von mehreren hundert Kilogramm verwirbelt und behandelt werden.

Ein Bestreben in dieser Technologie ist, ein möglichst gleichmäßiges Behandlungsergebnis zu erzielen. Beim Granulieren bedeutet dies, dass die Korngrößenverteilung der resultierenden Granulate möglichst eng sein soll. Beim Coaten soll die Überzugschicht möglichst gleichmäßig sein und bei allen Gutteilchen möglichst dieselbe Schichtdicke aufweisen.

Bei der Bewegung des Gutes ist es unvermeidlich, dass die Gutteilchen gegen Bauteile der Apparatur prallen oder sich Gutteilchen in dem Bett an bewegten Teilchen treffen. Beim Granulieren können dabei bereits gebildete Agglomerate wieder in kleinere Bruchstücke zerteilt werden, beim Coaten können Abplatzungen und Ausbrüche an der Coatingschicht erfolgen.

Für die Erzielung des gewünschten gleichmäßigen Behandlungsergebnisses ist es erforderlich, den bewegten Gutteilchen das Behandlungsmedium so aufzusprühen, dass möglichst alle Gutteilchen für einen möglichst gleichen Zeitraum mit dem Behandlungsmedium in Berührung treten. Da die Behandlungsmedien meist klebrige Flüssigkeiten sind, soll beim Granulieren sichergestellt werden, dass immer ein bestimmte Anzahl an mit der klebrigen Flüssigkeit benetzten Gutteilchen sich in der Zeitspanne treffen, in der diese Flüssigkeit noch klebrig ist und dadurch die aufeinandertreffenden Gutteilchen zu Agglomeraten verbinden. Beim Coaten soll dem einzelnen Teil ein ausreichender Zeitraum zur Verfügung stehen, damit die auf dieses einzelne Teil aufgesprühte Beschichtungslösung sich soweit verfestigt, dass diese selbst bei einem Aufprall nicht wieder weggeschleudert wird.

Im Zusammenhang mit den zuvor erwähnten großen Chargen sind erhebliche Energie- und Luftmengen notwendig, um eine ausreichend große Menge an durchtretender Prozessluft mit einem entsprechend ausreichenden Wärmeinhalt durch die Apparatur zu führen.

Es ist Aufgabe der vorliegenden Erfindung, eine Apparatur der eingangs genannten Art derart weiterzuentwickeln, dass ein verbessertes Behandlungsergebnis erzielt werden kann.

Erfindungsgemäß wird die Aufgabe dadurch gelöst, dass der Boden als Ventilator ausgebildet ist, der ein der Prozesskammer zugewandtes Ventilatorblatt aufweist, an dessen unterer Seite Ventilatorschaufeln angeordnet sind, und dass die Düse als mittig in der Hochachse stehende, radial sprühende Ringspaltdüse ausgebildet ist, wobei eine Mündung der Ringspaltdüse etwas über der Höhe eines jeweils obersten Ventilatorblattes zum Liegen kommt.

Die Maßnahme der Ausbildung des drehenden Bodens als Ventilator mit einem der Prozesskammer zugewandten Ventilatorblatt hat den Vorteil, dass der Boden zusätzlich noch zur Prozessluftführung herangezogen wird. Dadurch kann unmittelbar unter dem Boden durch den Ventilator die Prozessluft ganz gezielt der ringförmigen Eintrittsöffnung zwischen der äußeren Umfangskante des Ventilators und der diese etwas im Abstand umgebenden Behälterwand zugeführt werden. Dabei kann die Richtung, die Geschwindigkeit, also insbesondere die Menge, der zugeführten Prozessluft einfach gesteuert werden. Dies trägt zu einer definierten Bewegung der Gutteilchen nach oben bei. Die Gutteilchen werden durch die Prozessluft exakt gerichtet nach oben bewegt. Es wird diesen zugleich eine umfängliche und nach innen gerichtete Bewegungskomponente auferlegt. Dabei werden die Gutteilchen schraubenlinienförmig nach oben bewegt. Die Teilchen fallen dann aufgrund der Schwerkraft und dieser Bewegungskomponenten relativ gleichmäßig in dem inneren Prozesskammerraum verteilt wieder in Richtung des Bodens, also des Ventilatorblattes, hinab.

Die Ausgestaltung der Düse als mittig stehende Ringspaltdüse, deren Mündung etwas über dem Ventilatorblatt steht, erlaubt es nunmehr, in einem gewissen Abstand über dem Ventilatorblatt eine horizontale Sprühflade zu erzeugen. Eine solche Ringspaltdüse hat ja einen Umschlingungswinkel von 360°, d. h. sie sprüht von der mittigen Hochachse aus gesehen das Behandlungsmedium radial nach außen gerichtet, und zwar über den gesamten Umfang. Diese Sprühflade kann man sich als eine Art schwebenden Pfannkuchen über dem rotierenden Ventilatorblatt vorstellen. Da sich eine Sprühflüssigkeit, die aus einem Mündungsspalt ausgepresst wird, zu einem Sprühkegel aufweitet, und angesichts der Tatsache, dass die Mündung etwas über dem Ventilatorblatt angeordnet ist, ist sichergestellt, dass sich die komplette Sprühflade ausbilden kann und nicht die Gefahr besteht, dass ein Großteil des Sprühmediums lediglich die Oberseite des Ventilators besprüht.

Auf diese Sprühflade fallen nun von oben gleichmäßig verteilt die herabfallenden Gutteilchen und treten mit den Flüssigkeitströpfchen in der versprühten Sprühflade definiert in Berührung. Die Teilchen werden dann von dem Ventilatorblatt radial nach außen bewegt und durch die aufsteigende Prozessluft wieder im äußeren umfänglichen Randbereich der Prozesskammer nach oben bewegt. Somit steht diesen ein ausreichender Zeitraum zur Verfügung, in dem das aufgesprühte Behandlungsmedium entsprechend trocknen kann, bevor die Gutteilchen erneut aufgrund der Schwerkraft herabfallen und wieder mit der Sprühflade in Berührung treten.

Diese Ausgestaltung mit Ventilator und stehender, rundum sprühender Ringspaltdüse trägt zu einer erheblichen Verbesserung des nachgesuchten gleichmäßigen Behandlungsergebnisses bei.

In einer weiteren Ausgestaltung der Erfindung verläuft das Ventilatorblatt, von der mittigen Hochachse radial nach außen gesehen, zunächst nach unten geneigt.

Diese Neigung trägt dazu bei, dass die von oben herab gefallenen Gutteilchen, nachdem sie die Sprühflade durchdrungen haben, relativ sanft nach außen bewegt werden, da ihnen noch eine gewisse Wegstrecke entlang der Neigung nach unten zur Verfügung steht. Darüber hinaus wurde festgestellt, dass die Gutteilchen mit dieser Ausgestaltung in eine rollende Bewegung längs der Oberfläche des Ventilatorblatts in Richtung äußerer Umfangskante gebracht werden können. Diese rollende Bewegung fördert ebenfalls ein gleichmäßiges Behandlungsergebnis.

In einer weiteren Ausgestaltung der Erfindung ist das Ventilatorblatt im Bereich der Wand des Behälters ansteigend ausgebildet.

Diese Maßnahme hat den Vorteil, dass in diesem Bereich den Gutteilchen schon eine ansteigende Bewegungskomponente auferlegt wird, so dass ein sanfter Übergang in den Bereich möglich ist, in dem diese dann von der Prozessluft rasch nach oben beschleunigt werden.

Auch diese Ausgestaltung ist einem gleichmäßigen Behandlungsergebnis förderlich.

In Kombination der beiden zuvor genannten Ausgestaltungen des Ventilatorblattes in Art einer Hutkrempe können die auf das Ventilatorblatt herabfallenden Gutteilchen in die zuvor erwähnte Rollbewegung versetzt werden und sanft radial nach außen bewegt werden.

In einer weiteren Ausgestaltung der Erfindung ist die Wand des Behälters auf Höhe des Ventilators nach oben ansteigend gekrümmt.

Diese Maßnahme hat den Vorteil, insbesondere mit der zuvor erwähnten Maßnahme, dass der Übergang der Gutteilchen von dem Ventilatorblatt in die an der Wand hochsteigende Bewegung durch diesen gekrümmten Bereich besonders sanft abläuft. Dabei können insbesondere beim Granulieren ein Zerbrechen oder beim Coaten Abplatzungen weitgehend vermieden werden.

In einer weiteren Ausgestaltung der Erfindung verläuft die gekrümmte Behälterwand unterhalb des Ventilators radial nach innen.

Diese Maßnahme hat den Vorteil, dass dieser nach innen weisende Bereich der Wand quasi als untere Ventilatorplatte wirkt, so dass der eigentliche Ventilator auf der unteren Seite offen sein kann.

Dies erleichtert nicht nur die Herstellung, sondern insbesondere auch die Reinigung des Ventilators, denn bei dieser Ausgestaltung sind ja die Ventilatorschaufeln von einer Seite frei zugänglich.

In einer weiteren Ausgestaltung der Erfindung weist der Ventilator einen mittigen, nach unten vorstehenden Schaft auf, der eine mittige Öffnung aufweist, in der die Ringspaltdüse aufgenommen ist.

Diese Maßnahme hat den Vorteil, dass über den Schaft der Ventilator gut gelagert montiert und betriebssicher an einen Antrieb angeschlossen werden kann. Zugleich dient der Hohlraum in dem Schaft als Aufnahme für die stehende Ringspaltdüse. Dies vereinfacht die Konstruktion, erleichtert die Montage und Demontage und insbesondere auch die Reinigung der Vorrichtung.

In einer weiteren Ausgestaltung der Erfindung ist die Öffnung im Schaft radial so bemessen, das um eine Außenseite der Ringspaltdüse herum ein Spalt ausgebildet ist, über den Prozessluft längs der Außenseite der Ringspaltdüse bis zur Mündung führbar ist.

Es ist bekannt, dass unmittelbar neben Düsenmündungen durch das ausgesprühte Medium ein Unterdruckbereich entsteht, der dazu führen kann, dass sich Teilchen oder auch Flüssigkeitsmengen ansammeln können, die dann zu unerwünschten Anbackungen verkrusten.

Diese Anlagerung kann nun dadurch verhindert werden, dass ein Teil der Prozessluft um die Außenseite der Ringspaltdüse nach oben geführt wird und solche Ansammlungen dadurch ausschließt, dass dieser Bereich durch die Prozessluft permanent frei geblasen bleibt.

In einer weiteren Ausgestaltung der Erfindung ist der Ventilator mit einem Antrieb verbunden, der den Ventilator um die Hochachse dreht.

Dabei kann vorteilhafterweise der Antrieb unterhalb des Ventilators angeordnet sein und insbesondere vorteilhaft mit dem nach unten vorstehenden Schaft in Verbindung stehen. Der Antrieb kann so weit unterhalb des Ventilators angeordnet werden, dass er abseits der bewegten Luftmengen und auch abseits des Prozessraumes liegt, so dass hier keinerlei Verschmutzungen oder Kontaminationen zu befürchten sind.

In einer weiteren Ausgestaltung der Erfindung besteht der Antrieb aus einer gezielten Prozessluftführung an die Unterseite der am Ventilatorblatt angeordneten Ventilatorschaufeln.

Die erheblichen Luftmengen müssen ja außerhalb der Apparatur zum Aufbereiten, insbesondere zum Entfeuchten bewegt werden. Diese Bewegungsenergie der Prozessluft kann nun dazu herangezogen werden, den Ventilator zu bewegen. Die von der Unterseite des Ventilatorblatts abstehenden Ventilatorschaufeln richten dann in der gewünschten Art und Weise die Prozessluft auf die Durchtrittsöffnung in die Prozesskammer aus.

In einer weiteren Ausgestaltung der Erfindung weist der Ventilator ein zweites, oberes Ventilatorblatt auf.

Diese Maßnahme hat den Vorteil, dass das Vorsehen von zwei Ventilatorblättern die Möglichkeit eröffnet ist, das obere Ventilatorblatt, auf dem die Gutteilchen aufprallen, mit einer anderen, insbesondere einer geringeren Geschwindigkeit zu drehen als das darunter angeordnete Ventilatorblatt, an dem die Ventilatorschaufeln angebracht sind. Bei bestimmten Behandlungsverfahren kann es erforderlich sein, dass der Ventilator relativ schnell gedreht werden muss, um eine ausreichende Prozessluftmenge durch die Prozesskammer zu fördern. Bei einem empfindlichen Gut kann sich der Aufprall der herabfallenden Gutteilchen auf ein sich mit hoher Drehzahl bewegendes Ventilatorblatt ungünstig auf das Behandlungsergebnis auswirken. Durch die Zweiteilung ist es möglich, das obere Ventilatorblatt langsamer zu drehen, und dennoch das untere Ventilatorblatt sehr schnell zu drehen, falls eine hohe Luftmenge notwendig ist. Empfindliche Gutteilchen fallen dann auf das wesentlich langsamer drehende obere Ventilatorblatt, so dass der Aufprall sanfter ist.

In einer weiteren Ausgestaltung ist zwischen dem zweiten, oberen und dem darunter angeordneten primären Ventilatorblatt ein in Richtung Behälterwand öffnender Spalt vorhanden, in den Prozessluft einführbar ist.

Durch diesen Spalt können nun ganz gezielt abgezweigte Prozessluftmengen dem Bereich zugeführt werden, an dem die Gutteilchen den äußeren Rand des Ventilatorblattes verlassen und nach oben entlang der Wand des Behälters bewegt werden. Dies eröffnet zusätzliche Beeinflussungsmöglichkeiten in diesem kritischen Übergangsbereich.

In einer weiteren Ausgestaltung der Erfindung ist das zweite Ventilatorblatt drehbar im ersten Ventilatorblatt gelagert.

Dies hat nicht nur den Vorteil, dass die beiden Ventilatorblätter einfach über einander angeordnet und entsprechend gelagert werden können. Ein weiterer Vorteil besteht darin, dass das zweite, obere Ventilatorblatt durch das untere Ventilatorblatt angetrieben werden kann. Durch entsprechende Ausbildung der Reibung des Lagers kann aber dafür gesorgt werden, dass das obere Ventilatorblatt sich langsamer dreht als das untere, direkt über den Antrieb bewegte Ventilatorblatt. Ist zwischen den beiden Ventilatorblättern noch der zuvor erwähnte Spalt vorhanden, kann durch entsprechend eingeführte Luftmengen noch eine zusätzliche Bremswirkung erzielt werden, so dass die Geschwindigkeit des oberen zweiten Ventilatorblatts besser steuerbar ist. Das zweite, obere Ventilatorblatt kann freilaufend in dem unteren Ventilatorblatt gelagert sein, durch entsprechende Schwergängigkeit des Lagers ist sichergestellt, dass dieses aber nicht mit derselben Geschwindigkeit rotiert wie das untere Ventilatorblatt, sondern langsamer.

In einer weiteren Ausgestaltung der Erfindung ist vorgesehen, dass die Drehgeschwindigkeit des zweiten Ventilatorblattes unabhängig von der Drehgeschwindigkeit des primären Ventilatorblatts einstellbar ist.

Diese Maßnahme hat steuertechnisch den Vorteil, dass die Drehgeschwindigkeit individuell und insbesondere unabhängig von dem unteren Ventilatorblatt eingestellt werden kann. So kann beispielsweise der Schaft des oberen Ventilatorblattes, der in den Schaft des unteren Ventilatorblattes eingesteckt ist, entsprechend lang ausgebildet sein, so dass dieser diesen Schaft überragt und mit einem eigenen Antrieb verbunden werden kann.

In einer weiteren Ausgestaltung der Erfindung weist das oberste Ventilatorblatt zumindest eine umfänglich verlaufende, radial gerichtete Spaltöffnung auf.

Diese Maßnahme hat den Vorteil, dass durch diese radial gerichteten Spaltöffnungen zusätzlich Luftmengen zur Verfügung stehen, um die auf der Oberseite des obersten Ventilatorblattes abrollenden Gutteilchen radial nach außen zu bewegen. Es kann auch zusätzlich eine Art Luftpolster direkt über der Oberseite des obersten Ventilatorblattes erzeugt werden, so dass sich bei einem besonders empfindlichen Gut die Teilchen nicht direkt über der Oberfläche des Ventilatorblattes abrollen, sondern auf dem durch die radial gerichteten Spaltöffnungen erzeugten Luftpolster.

In einer weiteren Ausgestaltung der Erfindung ist die Spaltöffnung durch sich überlappende Blattabschnitte des Ventilatorblattes ausgebildet.

Diese Maßnahme hat den Vorteil, dass diese Spaltöffnungen konstruktiv einfach dadurch hergestellt werden können, dass das oberste Ventilatorblatt durch einen Satz sich überlappender Ringbleche aufgebaut wird.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: einen Vertikalschnitt eines ersten Ausführungsbeispiels einer erfindungsgemäßen Vorrichtung;
- Fig. 2: den in Fig. 1 mit einem gestrichelten Rechteck umgrenzten Bereich in stark vergrößertem Maß;
- Fig. 3: den Schnitt von Fig. 2 bei einem Betrieb der Vorrichtung mit den entsprechenden Erläuterungen der Strömungen der Prozessluft und der Bewegungen des Gutes;
- Fig. 4: die Schnittdarstellung von Fig. 1 mit der Vorrichtung in Betrieb beim Behandeln von Gut, wobei die Gutbewegungen, die Prozessluftströmung und die Wirkung eines Filter-/Pulverrückführungssystems dargestellt sind;
- Fig. 5: eine der Fig. 3 vergleichbare Darstellung eines zweiten Ausführungsbeispiels eines erfindungsgemäßen Ventilators;
- Fig. 6: eine den Figuren 3 und 5 vergleichbare Darstellung eines dritten Ausführungsbeispiels eines erfindungsgemäßen Ventilators; und
- Fig. 7: eine der Darstellung von Fig. 2 vergleichbare Darstellung eines vierten Ausführungsbeispiels eines erfindungsgemäßen Ventilators.

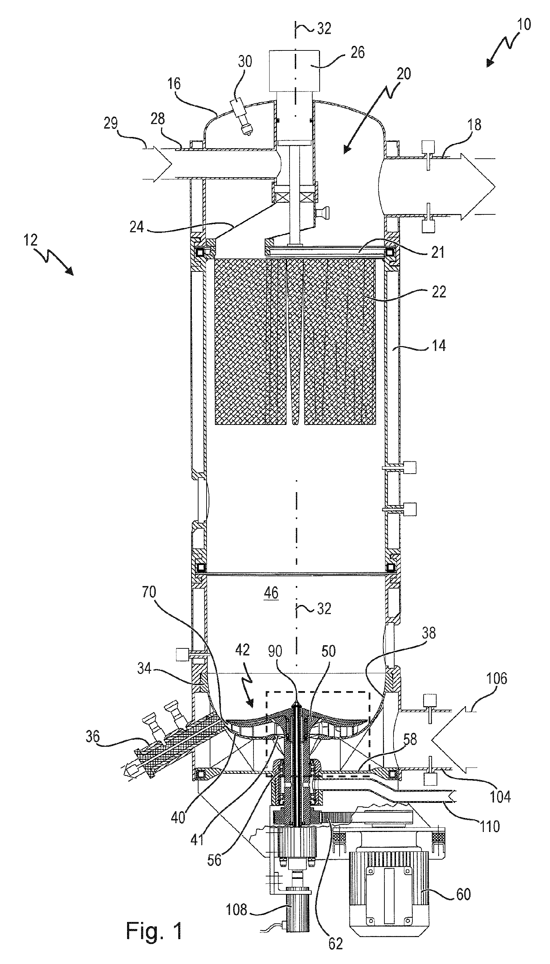

In den Figuren 1 bis 4 ist ein erstes Ausführungsbeispiel einer erfindungsgemäßen Vorrichtung dargestellt, die in ihrer Gesamtheit mit der Bezugsziffer 10 bezeichnet ist.

Die Vorrichtung 10 weist einen stehenden Behälter 12 auf. Der Behälter 12 weist einen mittigen doppelwandigen zylindrischen Abschnitt 14 auf, der am oberen Ende mit einem Filterdom 16 verschlossen ist. Vom Filterdom 16 steht seitlich ein Abluftstutzen 18 vor. Im Bereich des Filterdomes 16 sowie im oberen Bereich des zylindrischen Abschnittes 14 des Behälters 12 ist ein Filter-/Pulverrückführungssystem 20 angeordnet.

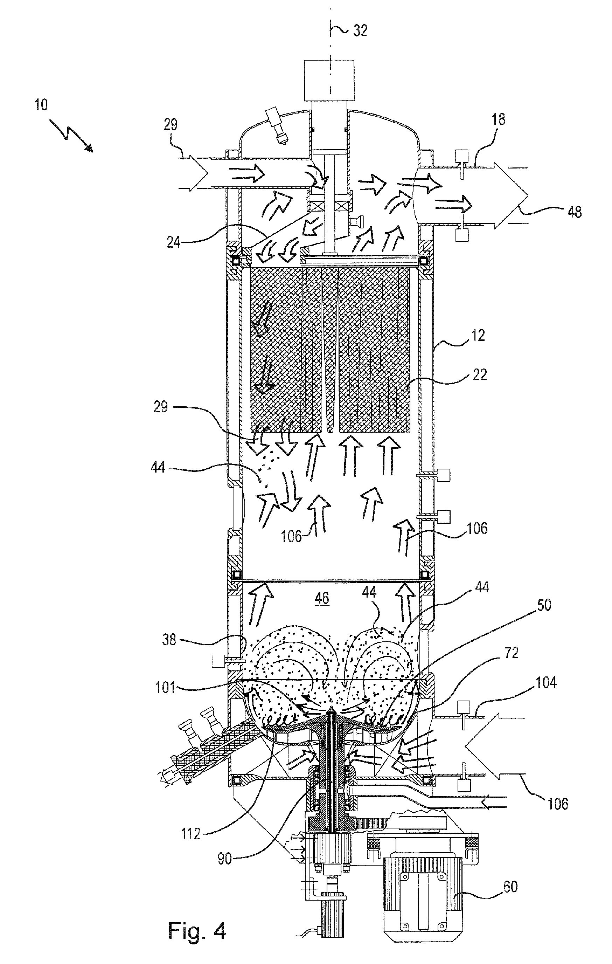

Dieses System 20 beinhaltet Filtertaschen 22, die von einem Träger 21 nach unten abhängen. Über das obere Ende der Filtertaschen 22 auf Höhe des Trägers 21 ist ein rotierender Blasschuh 24 angeordnet, der durch einen Antriebsmotor 26 in eine Drehbewegung um die mittige Hochachse 32 der Vorrichtung 10 versetzt wird. Über einen seitlichen Blasluftstutzen 28 kann Abblasluft 29 in das Innere des rotierenden Blasschuhs 24 eingeführt werden. Die Funktionsweise wird später im Zusammenhang mit Figur 4 näher beschrieben. Im Filterdom 16 sitzt auch eine Reinigungsdüse 30, die dazu dient, zumindest diesen Bereich der Vorrichtung 10 zu reinigen.

Am unteren Ende des zylindrischen Abschnittes 14 ist ein Produktbehälter 34 angeordnet. Ein seitlich von dem Produktbehälter 34 vorstehender, nach unten geneigter Befüll-/Entleerstutzen 36 dient zum Befüllen bzw. zum Entleeren des Produktbehälters 34.

Dieser Befüll-/Entleerstutzen 36 mündet in einer unteren Wand 38, die eine Fortsetzung der inneren Wand des Behälters 12 darstellt.

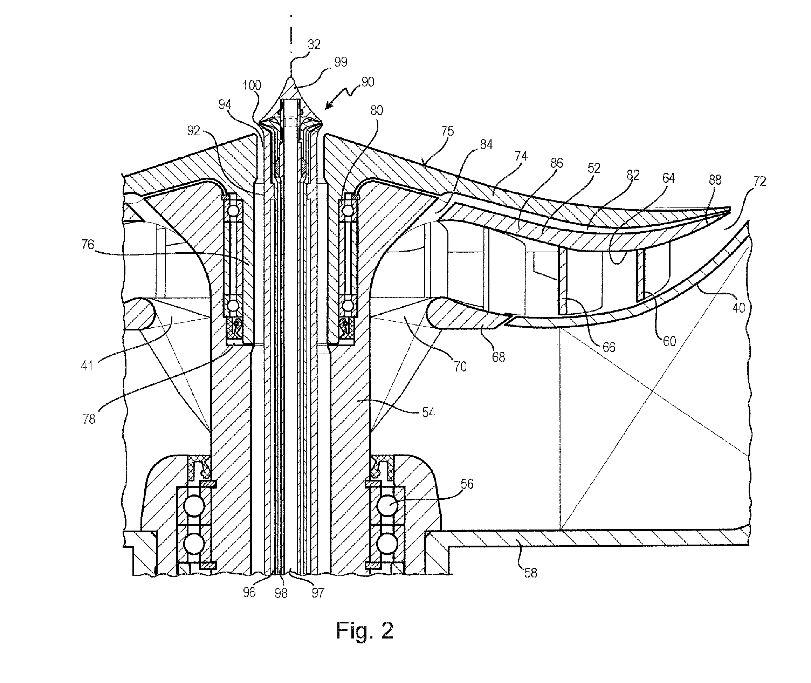

Aus Fig. 1 und Fig. 2 ist zu erkennen, dass die Wand 38 einen nach unten und innen gekrümmten Abschnitt 40 aufweist, der etwa in einer Horizontalebene endet und eine mittige zentrale Öffnung 41 umrundet.

In die Öffnung 41 ist ein Boden 42 eingesetzt, auf dem das zu behandelnde Gut 44, das durch den Befüllstutzen 36 eingeführt wurde, zum Liegen kommt. Der Innenraum des Behälters 12 über dem Boden 42 stellt eine Prozesskammer 46 dar.

Entsprechend der Lehre der vorliegenden Erfindung ist der Boden 42 als Ventilator 50 ausgebildet, wie er insbesondere im Detail aus der Fig. 2 zu entnehmen ist.

Der Ventilator 50 weist ein erstes oder primäres Ventilatorblatt 52 auf, das mit einem sich in der Hochachse 32 erstreckenden Schaft 54 verbunden ist.

Der Schaft 54 des Ventilators 50 ist in einem Lager 56 drehbar aufgenommen, das wiederum in einem Windhausboden 58 montiert ist.

Der Windhausboden 58 bildet einen unteren Abschluss des Behälters 12. Der Raum zwischen Windhausboden 58 und Boden 42 wird üblicherweise als Windhaus bezeichnet, da in dieses Windhaus über einen seitlich abstehenden Zuluftstutzen 104 die Prozessluft 106 zugeführt wird.

Aus Fig. 1 ist zu entnehmen, dass das untere Ende des Schafts 54 des Ventilators 50 über einen Riemen 62 mit einem Antriebsmotor 60 verbunden ist. Dadurch kann der Ventilator 50 um die Hochachse 32 drehbewegt werden.

Insbesondere aus Fig. 2 ist zu erkennen, dass an der Unterseite 64 des ersten Ventilatorblattes 52 gekrümmte Ventilatorschaufeln 66 angeordnet sind, die in einem radial mittigen Bereich an der Unterseite teilweise mit einem Abdeckstück 68 verbunden sind.

Wie insbesondere aus der Schnittdarstellung von Fig. 2 zu erkennen, ist dieses Abdeckstück 68 so ausgestaltet und angeordnet, dass es quasi eine Verlängerung des nach innen gebogenen Abschnittes 40 der Wand 38 darstellt.

Die Ventilatorschaufeln 66 sind daher an der Unterseite im radial äußeren Bereich durch den Abschnitt 40 und im radial weiter inneren Bereich durch das Abdeckstück 68 abgedeckt. Allerdings bleibt eine Ansaugöffnung 70 zwischen dem radial inneren Ende des Abdeckstückes 68 und der Außenseite des Schaftes 54 frei. Über diese Ansaugöffnung 70 wird, wie das später noch näher beschrieben wird, Prozessluft angesaugt und bei drehendem Ventilator 50 einer Ausblasöffnung 72 zugeführt. Die Ausblasöffnung 72 ist eine ringförmige Öffnung, die in Richtung der inneren Wand 38 des Behälters 12 mündet.

Aus Fig. 2 ist zu erkennen, dass im Ventilator 50 ein oberes, zweites Ventilatorblatt 74 montiert ist. Auch dieses zweite Ventilatorblatt 74 weist einen längs der Hochachse 32 nach unten vorspringenden Schaft 76 auf.

Dieser Schaft 76 des zweiten Ventilatorblattes 74 ist in einer mittigen zentralen Öffnung 78 des Schaftes 54 des ersten Ventilatorblattes 52 montiert. Dabei erlaubt ein Lager 80 zwischen der Außenseite des Schaftes 76 und der Innenseite der Öffnung 78 im ersten Schaft 54 eine relative Drehbewegung zwischen erstem Ventilatorblatt 52 und zweiten Ventilatorblatt 74.

Wie insbesondere aus Fig. 2 zu erkennen, ist im ersten Ventilatorblatt 52, etwa auf Höhe des radial inneren Endes des Abdeckstückes 68, eine Öffnung 84 vorhanden, über die Prozessluft in einen Spalt 82 zwischen den Ventilatorblättern 52 und 74 eingeführt werden kann.

Dieser Spalt 82 mündet etwa auf Höhe der Ausblasöffnung 72. Wie später noch erläutert, können somit Teile der Prozessluft durch den Spalt 82 zwischen den Ventilatorblättern 52 und 74 transportiert werden.

Wie insbesondere aus der Schnittdarstellung von Fig. 2 zu erkennen, weist das erste Ventilatorblatt 52, radial von innen nach außen gesehen, einen ersten, sanft nach unten geneigten Abschnitt 86 auf, der über eine sanfte Krümmung in einen sanft ansteigenden Endabschnitt 88 übergeht.

Das obere, zweite Ventilatorblatt 74 weist dieselbe Geometrie auf.

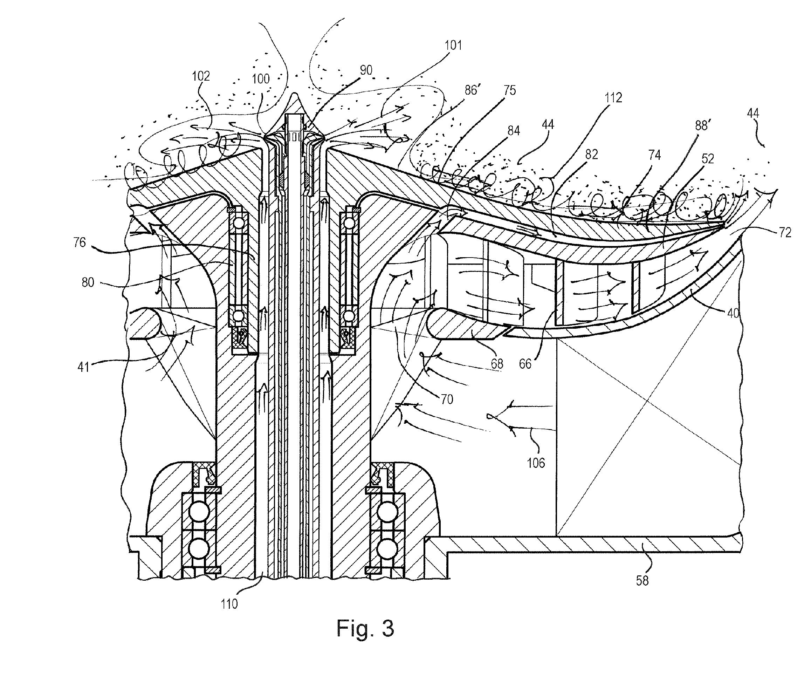

Die Oberseite 75 bzw. die entsprechende Oberfläche des zweiten Ventilatorblattes 74 stellt somit den eigentlichen Boden dar, auf dem das Gut zum Liegen kommt. Die zuvor dargelegte Geometrie in Art einer Hutkrempe fördert eine sanfte radiale Transportbewegung des darauf liegenden Gutes, wie das nachfolgend noch im Zusammenhang mit Fig. 3 näher beschrieben wird.

In der zentralen mittigen Öffnung 78 des Schaftes 54 des ersten Ventilatorblattes 52 ist eine stehende Ringspaltdüse 90 eingesetzt. Dazu weist auch der Schaft 76 des zweiten, oberen Ventilatorblattes 74 eine mittige zentrale Öffnung auf.

Eine derartige Ringspaltdüse ist beispielsweise näher in der EP 1 521 639 B1 im Namen des Anmelders beschrieben und erläutert, so dass bezüglich Details der Düse ausdrücklich auf dieses Dokument Bezug genommen werden kann.

Die Ringspaltdüse 90 weist einen langgestreckten stabförmigen Körper auf, der sich vollkommen durch den Schaft 54 hindurch erstreckt. Am oberen Ende weist die Ringspaltdüse 90 einen Kopf auf, der durch einen Kegel 99 abgeschlossen ist. Dort liegt auch die Mündung 100 der Ringspaltdüse 90, die um einen kompletten Umschlingungswinkel von 360° etwa horizontal aussprüht. Im Innern sind zwei Sprühluftspalte 96, 97 vorgesehen, die einen dazwischen liegenden Flüssigkeitsspalt 98 umrunden. Eine durch den Flüssigkeitsspalt 98 zur Mündung 100 bewegte Flüssigkeit wird durch die beidseits über die Sprühluftspalte 96 und 97 austretende Sprühluft zu einem feinen Sprühnebel zerstäubt. Aufgrund der Geometrie mit dem 360° Umschlingungswinkel tritt aus der Mündung 100 eine etwa ebene Sprühflade 101 aus, wie das in Fig. 3 und 4 angedeutet ist.

Jeder aus einem Spalt austretende Sprühstrahl weist einen sich stetig aufweitenden Sprühkegel 102 auf, dies ist auch bei der Sprühflade 101 der Fall, d. h. je radial weiter außen man die Sprühflade im Vertikalschnitt betrachtet, desto weiter hat sich der Kegel 102 aufgeweitet.

Daher ist die Mündung 100 etwas im Abstand über das oberste radial innere Ende des zweiten Ventilatorblattes 74 angeordnet, so dass es möglich ist, dass sich dieser Sprühkegel 102 ausbildet.

Der geneigte Abschnitt 86' bietet diesem Sprühkegel 102 entsprechend Raum sich zu entfalten, wie das aus Fig. 3 und ersichtlich ist.

Daher bedeutet der Begriff, dass sich die Mündung 100 etwas über der Höhe des oberen bzw. obersten Ventilatorblattes 74 befindet, dass sich dieser Kegel 102 ausbilden kann.

Aus Fig. 1 ist zu erkennen, dass die Ringspaltdüse 90 an ihrem unteren Ende mit einer entsprechenden Versorgung 108 verbunden ist, über die die verschiedenen Medien, also Sprühluft und Sprühflüssigkeit zugeführt werden können.

Wie insbesondere aus Fig. 3 zu entnehmen ist, ist Mündung 100 so ausgerichtet, dass sich die Sprühflade 101 etwa in einer horizontalen Ebene erstreckt.

Aus Fig. 2 ist zu erkennen, dass zwischen der Außenseite 92 des stabförmigen Körpers der stehenden Ringspaltdüse 90 und der Öffnung 78 im Schaft 54 bzw. im Schaft 76 ein sogenannter Blasspalt 94 ausgebildet ist.

Wie insbesondere aus Fig. 1 zu erkennen, wird dieser Blasspalt 94 durch eine seitlich abstehende Blasspaltzufuhr 110 mit Blasluft versorgt.

Diese Blasluft wird von unten nach oben in dem Blasspalt 94 geführt und tritt, wie das insbesondere in Fig. 3 ersichtlich ist, kurz unter der Mündung 100 aus. Diese Blasluft kann dazu herangezogen werden, die Mündung 100 vor allfälligen Anbackungen und Ansammlungen von Material stetig im Betrieb frei zu blasen. Es ist bekannt, dass im unmittelbaren Mündungsbereich einer Mündung 100 seitlich Unterdruckbereiche entstehen, in die umherfliegende Partikel oder Flüssigkeitströpfchen angesaugt werden, die dann in diesem Bereich anhaften und aufgrund der meist klebrigen Behandlungsmaterialien zu Verbackungen neigen. Dies kann durch diese Konstruktion absolut vermieden werden.

Aus der Schnittdarstellung von Fig. 2 ist zu erkennen, dass die Mündung 100 in einem seitlich etwas aufgeweiteten Abschnitt der Ringspaltdüse 90 vorhanden ist, der der aus dem Blasspalt 94 austretenden Blasluft eine horizontale Bewegungskomponente auferlegt.

Diese Blasluft kann zur Stützung des unteren Endes der Sprühflade 101 dienen, wie das in Fig. 3 ersichtlich ist. In Fig. 3 und 4 ist dargestellt, wie sich die Prozessluftführungen und die Bewegung des zu behandelnde Gutes in der erfindungsgemäßen Vorrichtung 10 abspielen bzw. verhalten. Nach deren Befüllung über den Befüllstutzen 36 liegt das Gut zunächst auf dem obersten, also dem zweiten Ventilatorblatt 74.

Der Ventilator 50 und somit dessen erstes Ventilatorblatt 52 werden über den Antriebsmotor 60 in eine Drehbewegung um die Hochachse 32 versetzt. Durch entsprechend reibende Ausbildung des Lagers 80 wird auch das zweite, oberste Ventilatorblatt 74 mitgedreht, jedoch mit einer geringeren Geschwindigkeit.

Über den seitlich abstehenden Zuluftstutzen 104 wird Prozessluft 106 in das Windhaus eingeführt, und diese strömt zu der Ansaugöffnung 70 des Ventilators 50. Die Ventilatorschaufeln 66 bewegen die Prozessluft 106 in Richtung der Ausblasöffnung 72.

Wie insbesondere aus Fig. 3 zu entnehmen, wird ein Teil der Prozessluft 106 über die Öffnung 84 in den Spalt 82 zwischen dem unteren, ersten Ventilatorblatt 52 und dem oberen, zweiten Ventilatorblatt 74 eingeführt, und diese strömt zu der radial äußeren Mündung im Bereich der Ausblasöffnung 72. Die Menge der in diesem Spalt 82 enthaltenen Prozessluft kann ebenfalls zur Steuerung der Relativgeschwindigkeit zwischen erstem Ventilatorblatt 52 und zweitem Ventilatorblatt 74 herangezogen werden. Ist viel Prozessluft 106 in den Spalt 82 eingeführt, verstärkt dies die Reibung zwischen dem motorisch angetriebenen unteren, ersten Ventilatorblatt 52 und dem darin freilaufend gelagerten zweiten Ventilatorblatt 74. Die Drehzahl des oberen, zweiten Ventilatorblattes 74 hängt somit von der Reibung des Lagers 80 und den entsprechend hier nicht näher bezeichneten Dichtungen, der Höhe des Spaltes 82 und der in diesen Zwischenraum zugeführten Prozessluftmenge ab. Das im Produktbehälter 34 aufgenommene Gut wird, wie das insbesondere in Fig. 4 ersichtlich ist, durch die aus der Ausblasöffnung 72 austretende Prozessluft 106 vertikal nach oben längs der Innenseite der Wand 38 des Behälters 12 bewegt.

Die auf dem Boden vorhandenen Gutteilchen 44 bewegen sich zunächst radial über den ersten, nach unten geneigten Abschnitt 86' etwas nach unten, werden dann durch den ansteigenden Endabschnitt 88' schon etwas nach oben geführt, wobei die Bewegung nach oben durch den gekrümmten Abschnitt 40 der Wand 38 sanft erfolgt, so dass diese Gutteilchen 44 aus der Horizontalbewegung schonend, aber dennoch sehr rasch und effektiv in die vertikal nach oben gerichtete Bewegung umgelenkt werden. Durch die Drehung des Ventilators 50 wird den Gutteilchen 44 noch zusätzlich eine umfängliche Komponente auferlegt, so dass diese eine orbital-toroidal verlaufende Raumbewegung durchführen.

Die Gutteilchen 44 fallen ab einer gewissen Höhe aufgrund der Schwerkraft wieder auf den Ventilator 50 zurück, die Prozessluft 106 strömt weiter nach oben.

Den Gutteilchen 44 wurde dabei auch eine Bewegungskomponente auferlegt, die radial nach innen gerichtet ist, so dass die Gutteilchen 44 mittig gerichtet nach unten abfallen, wie das insbesondere in Fig. 4 durch die Pfeile dargestellt ist.

Beim Herabfallen treffen nun die Gutteilchen 44, wie das in Fig. 3 und 4 dargestellt ist, auf die etwa horizontal ausgesprühte Sprühflade 101, und sie werden dadurch sehr gleichmäßig mit dem zu behandelnden Sprühmedium beaufschlagt. Nach Durchschreiten der Sprühflade 101 prallen die Gutteilchen 44 auf die Oberseite 75 des oberen, zweiten Ventilatorblattes 74. Dabei wurde festgestellt, dass bei einer relativ geringen Drehzahl des zweiten Ventilatorblattes 74 die Gutteilchen 44 in eine Art Rollbewegung versetzt werden, wie das durch die Pfeile 112 dargestellt ist.

Durch die Hutkrempengeometrie des obersten Ventilatorblattes 74 rollen die Gutteilchen 44 relativ sanft, also verletzungsarm, radial nach außen und werden durch die Prozessluft 106 ergriffen und nach oben bewegt. In diesem Bereich treten sie mit der Wärme der Prozessluft in einen Austausch, so dass das aufgesprühte Medium abtrocknen kann.

Diese zuvor beschriebene Ausgestaltung erlaubt zahlreiche Steuerungsparameter, um individuell auf den Behandlungsvorgang, also beispielsweise nur Trocknen, Granulieren oder Coaten, einzugehen und auch auf die Natur des zu behandelnden Gutes.

Dies resultiert in einem hervorragenden Behandlungsergebnis, beispielsweise beim Granulieren in einer extrem engen Korngrößenverteilung. Beim Coaten können exakt bemessene Überzugsschichten ausgebildet werden, was im pharmazeutischen Bereich deswegen besonders wichtig ist, da bei manchen Anwendungsformen diese Schichten nach einer oralen Verabreichung nach einer ganz bestimmten Zeit von den Körperflüssigkeiten abgebaut, bzw. abgelöst, werden sollen, so dass dann der meist im inneren Kern vorhandene Wirkstoff freigesetzt werden kann.

Für eine exakte Wirkung ist es daher notwendig, dass die Überzugsschicht eine genau definierte Schichtdicke aufweist, um zu vermeiden, dass diese Schicht zu früh oder zu spät aufgelöst wird und somit der Wirkstoff nicht an der richtigen Stelle freigesetzt wird.

Wie aus Fig. 4 zu erkennen, ist nicht auszuschließen, dass von der nach oben strömenden Prozessluft 106 insbesondere feine Gutteilchen 44 mitgerissen werden.

Beim Granulieren, insbesondere im pharmazeutischen Bereich, sind das oftmals sehr teure Wirkstoffe.

Diese mitgerissenen Gutteilchen 44 werden von den Filtertaschen 22 ausgefiltert und durch den stetig umlaufenden Blasluftstutzen 24 durch die durch diesen hindurch geführte Abblasluft 29 nach unten abgeblasen, so dass diese wieder zurückfallen und an dem Behandlungsprozess teilnehmen können. Die Prozessluft 106 wird vom Filterdom 16 über den Abluftstutzen 18 als Prozessabluft 49 abgeführt.

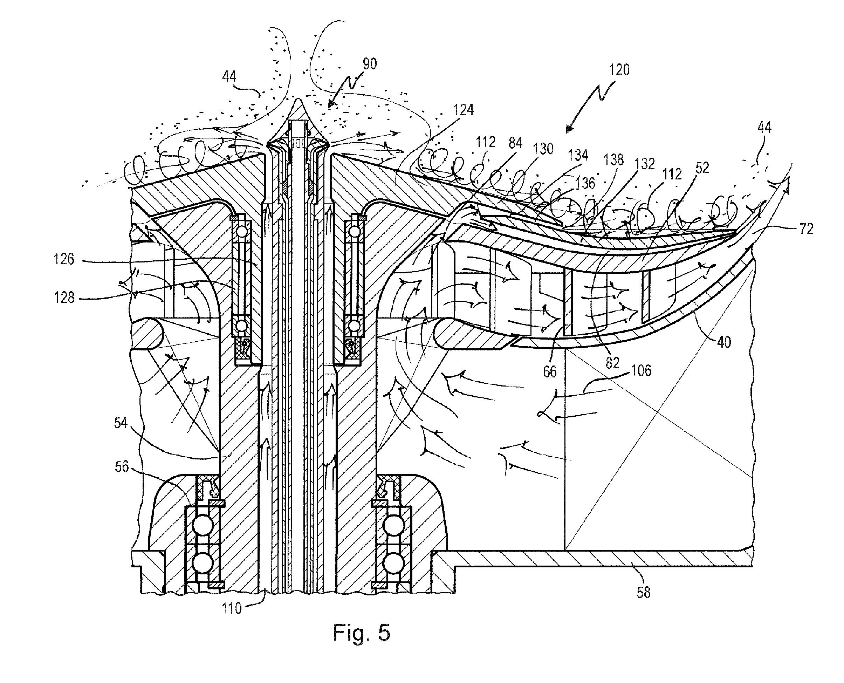

In Fig. 5 ist ein zweites Ausführungsbeispiel eines erfindungsgemäßen Ventilators beschrieben, der in seiner Gesamtheit mit der Bezugsziffer 120 bezeichnet ist.

Der Ventilator 120 kann beispielsweise anstelle des zuvor beschriebenen Ventilators 50 eingesetzt werden, und er weist auch zahlreiche Bauteile auf, die gleich wie die Bauteile des Ventilators 50 sind, so dass diesbezüglich auch bei dem Ventilator 120 dieselben Bezugszeichen wie beim Ventilator 50 verwendet werden.

Der Ventilator 120 weist somit ein erstes, unteres Ventilatorblatt 52 auf, das mit einem Schaft 54 verbunden ist, der wiederum, wie zuvor beschrieben, in einem Lager 56 aufgenommen ist. Die Ausgestaltung der Unterseite der Wand 40 sowie der Ventilatorschaufeln 66 und auch die Geometrie mit dem zunächst geneigten und anschließend ansteigenden Abschnitten ist gleich wie zuvor im Zusammenhang mit dem Ventilator 50 beschrieben.

In dem Schaft 54 ist auch hier ein zweites Ventilatorblatt 124 frei drehend eingesetzt. Dazu weist dieses einen entsprechenden Schaft 126 auf, der in einem Lager 128 in der mittigen Öffnung im Schaft 54 sitzt.

Auch hier ist eine mittig stehende Ringspaltdüse 90 eingesetzt.

Im Gegensatz zu der zuvor im Zusammenhang mit dem Ventilator 50 beschriebenen Ausgestaltung ist das obere, zweite Ventilatorblatt 124 mehrteilig ausgebildet. Im dargestellten Ausführungsbeispiel ist ein erster, radial innerer Blattabschnitt 130 vorhanden, der sich etwa über das halbe radiale Maß des zweiten Ventilatorblattes 124 erstreckt.

An diesem ersten inneren Blattabschnitt 130 ist an dessen Unterseite über Abstandhalter 134 ein radial äußerer, zweiter Blattabschnitt 132 montiert.

Insgesamt bleibt die Geometrie des zweiten Ventilatorblattes 124, wie im Zusammenhang mit dem zweiten Ventilatorblatt 74, erhalten, also ein zunächst nach unten geneigter Abschnitt im Bereich des inneren Blattabschnittes 130, der dann in einen nach radial außen sanft ansteigenden Blattabschnitt 132 übergeht.

Wie aus Fig. 5 zu erkennen, überlappt der erste Blattabschnitt 130 etwas den darunter liegenden äußeren Blattabschnitt 132, wobei ein Luftspalt 136 entsteht.

Aus Fig. 5 ist zu erkennen, dass dieser Luftspalt 136 durch die Öffnung 84 in dem ersten, unteren Ventilatorblatt 52 mit Prozessluft 106 gespeist wird.

Das bedeutet, über diese Öffnung 84 strömt nicht nur, wie zuvor beschrieben, Prozessluft zwischen die beiden Ventilatorblätter 52 und 124, sondern auch in den Luftspalt 136 zwischen den beiden Blattabschnitten 130 und 132 des oberen, zweiten Ventilatorblattes 124. Aus Fig. 5 ist zu erkennen, dass die resultierende Spaltöffnung 138 radial nach außen gerichtet ist, und somit gewisse Prozessluftmengen in diese Richtung ausbläst.

Diese Prozessluftmengen können nunmehr zur Unterstützung der Rollbewegung 112 und zur Beschleunigung der Gutteilchen 44 radial nach außen herangezogen werden.

Ein weiterer, sehr vorteilhafter Effekt ist, dass dadurch auf der Oberseite des zweiten, äußeren Blattabschnittes 132 eine Art Luftpolster erzeugt werden kann, auf dem die Gutteilchen 44 sanft abrollend radial nach außen geführt werden können.

Im dargestellten Ausführungsbeispiel ist nur eine solche Spaltöffnung 138 dargestellt, die sich vollumfänglich erstreckt. Es kann aber auch das Ventilatorblatt 124 nicht nur aus zwei, sondern auch aus mehreren sich überlappenden solchen Ringabschnitten zusammengesetzt werden, so dass entsprechend mehrere Spaltöffnungen 138 entstehen.

Dies wird insbesondere bei sehr großen Vorrichtungen durchgeführt werden, die Innendurchmesser von mehreren Metern aufweisen.

Die Behandlungscharakteristik und die Luftführung bei dem zweiten Ausführungsbeispiel von Fig. 5 sind im Prinzip gleich wie beim zuvor beschriebenen ersten Ausführungsbeispiel, allerdings mit dem zusätzlichen Effekt der Einspeisung von Prozessluft über die Spaltöffnung 138.

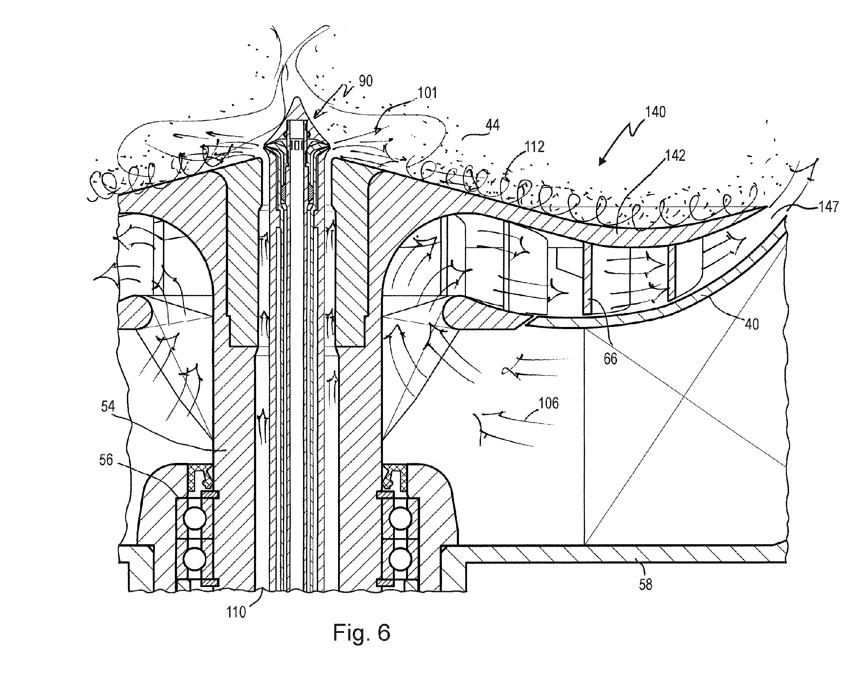

Bei dem in Fig. 6 dargestellten dritten Ausführungsbeispiel eines erfindungsgemäßen Ventilators ist dieser in seiner Gesamtheit mit der Bezugsziffer 140 bezeichnet. Auch hier ist es so, dass zahlreiche Bauteile des Ventilators 140 gleich sind wie die Bauteile der zuvor beschriebenen Ventilatoren 50 und 120, so dass auch hier diesbezüglich wieder dieselben Bezugszeichen verwendet werden.

Aus Fig. 6 ist zu erkennen, dass der Ventilator 140 nur ein einziges Ventilatorblatt 142 aufweist, an dessen Unterseite die Ventilatorschaufeln 66 montiert sind. Auch hier ist wieder der Schaft 54 vorgesehen, über den der Ventilator 140 drehbar in dem Lager 56 aufgenommen ist. Auch hier ist in die mittige zentrale Öffnung des Schaftes 54 eine stehende Ringspaltdüse 90 eingesetzt.

Im Betrieb wird Prozessluft 106 seitlich zwischen der Unterseite des Abschnittes 40 der Wand 38 und dem Windhausboden 58 eingeführt, und diese strömt über die Ventilatorschaufeln 66 geleitet einer Ausblasöffnung 147 zu.

Das Ventilatorblatt 142 wird um die Hochachse gedreht. Diese Drehbewegung kann, wie zuvor beschrieben, durch einen Antrieb erfolgen. Diese Drehbewegung kann auch ausschließlich durch die Prozessluft 106 erzeugt werden.

Das heißt, wird eine ausreichende Prozessluftmenge 106 eingeführt, führt deren kinetische Energie in Zusammenwirkung mit den gekrümmten Ventilatorschaufeln 66 dazu, dass sich das Ventilatorblatt 142 allein schon durch diese Energie der Prozessluft 106 dreht.

Dies ist prinzipiell auch bei den zuvor gezeigten Konstruktionen der Ventilatoren 50 und 120 möglich.

Auch mit dem Ventilator 140 findet die zuvor beschriebene Produktbehandlung statt, d. h. die Gutteilchen 44 rollen in einer Rollbewegung 112 radial nach außen und werden durch die durch die Ausblasöffnung 147 austretende Prozessluft 106 vertikal nach oben beschleunigt und fallen dann wieder auf den Ventilator 140 zurück. Dabei durchschreiten sie wieder die Sprühflade 101 und werden mit dem Behandlungsmedium beaufschlagt.

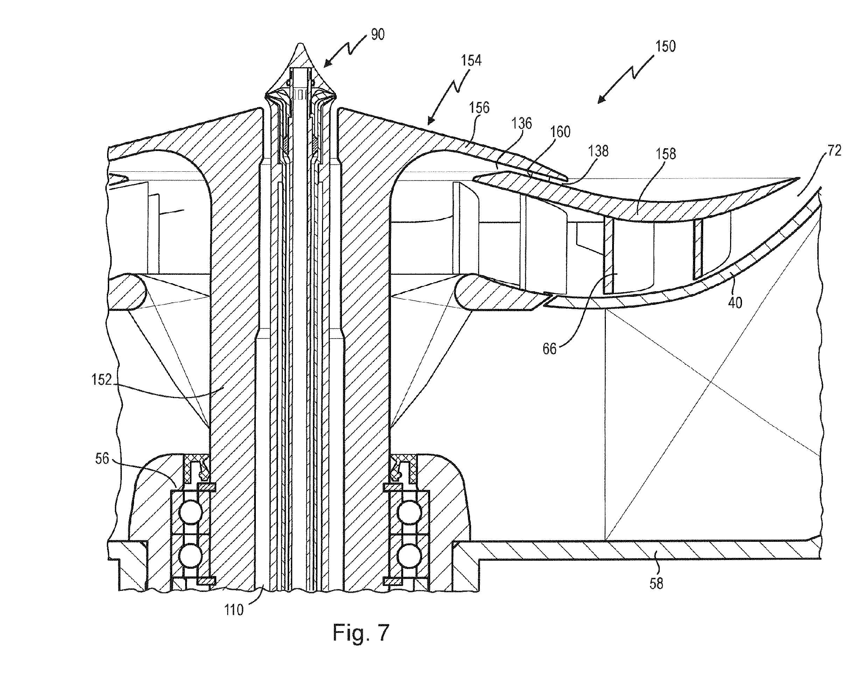

Bei dem in Fig. 7 dargestellten vierten Ausführungsbeispiel eines erfindungsgemäßen Ventilators ist dieser in seiner Gesamtheit mit der Bezugsziffer 150 versehen.

Bei diesem Ventilator 150 ist das einzige obere Ventilatorblatt 152 zweiteilig ausgebildet, also aus einem radial inneren Blattabschnitt 156 und einem radial äußeren Blattabschnitt 158 über entsprechende Abstandhalter 160 aufgeteilt. Dies entspricht also der Konstruktion des zweiten Ventilatorblattes 124, wie es im Zusammenhang mit Fig. 5 beschrieben worden ist. Somit resultiert auch hier eine Spaltöffnung 158 durch die Prozessluft über die Oberseite des zweiten, radial äußeren Blattabschnittes 158 geführt werden kann.

Auch das Ventilatorblatt 154 weist wieder einen nach unten vorstehenden Schaft 152 auf, der in dem Lager 56 sitzt, das von dem Windhausboden 58 getragen wird. Auch hier ist wieder eine stehende Ringspaltdüse 90 eingesetzt, und zwar so, dass auch hier wieder die äußere Blasspaltzufuhr 110 ausgebildet ist. Auch der Ventilator 150 kann durch einen Antrieb bewegt werden.

Es ist auch möglich, mit entsprechend gleitreibungsarmer Ausbildung des Lagers 56 den Ventilator 150, wie zuvor beschrieben, durch die Prozessluft 106 zu bewegen.

## Patentansprüche

1. Vorrichtung zum Behandeln von partikelförmigem Gut (44) mit einem stehenden Behälter (12), der eine Prozesskammer (46) aufweist, in der ein um eine Hochachse (32) drehbarer Boden (42) angeordnet ist, wobei Prozessluft (106) zwischen einem äußeren Umfang des drehbaren Bodens (42) und der diesen umgebenden Wand (38) des Behälters (12) in die Prozesskammer (46) einführbar ist, sowie mit einer Düse, um einem in der Prozesskammer (46) bewegten Gut (44) ein Behandlungsmedium aufzusprühen, **dadurch gekennzeichnet, dass** der Boden (42) als Ventilator (50, 120, 140, 150) ausgebildet ist, der ein der Prozesskammer (46) zugewandtes primäres Ventilatorblatt (52, 142, 154) aufweist, an dessen Unterseite Ventilatorschaufeln (66) angeordnet sind, und dass die Düse als mittig in der Hochachse (32) stehende radial sprühende Ringspaltdüse (90) ausgebildet ist, wobei eine Mündung (100) der Ringspaltdüse (90) etwas über der Höhe eines jeweils obersten Ventilatorblattes zum Liegen kommt.

2. Vorrichtung nach Anspruch 1, **dadurch gekennzeichnet, dass** jedes Ventilatorblatt (52, 74, 124, 142, 154), von der mittigen Hochachse (32) radial nach außen gesehen, zunächst nach unten geneigt verläuft.

3. Vorrichtung nach Anspruch 1 oder 2, **dadurch gekennzeichnet, dass** jedes Ventilatorblatt (52, 74, 124, 142, 154) im Bereich der Wand (38) des Behälters (12) ansteigend ausgebildet ist.

4. Vorrichtung nach einem der Ansprüche 1 bis 3, **dadurch gekennzeichnet, dass** die Wand (38) des Behälters (12) auf Höhe des Ventilators (50, 120, 140, 150) nach oben ansteigend gekrümmt verläuft.

5. Vorrichtung nach Anspruch 4, **dadurch gekennzeichnet, dass** die gekrümmte Behälterwand (38) unterhalb des Ventilators (50, 120, 140, 150) radial nach innen verläuft.

6. Vorrichtung nach einem der Ansprüche 1 bis 5, **dadurch gekennzeichnet, dass** der Ventilator (50, 120, 140, 150) einen mittig, nach unten vorstehenden Schaft (54, 152) aufweist, der eine mittige Öffnung (78) aufweist, in der die Ringspaltdüse (90) aufgenommen ist.

7. Vorrichtung nach Anspruch 6, **dadurch gekennzeichnet, dass** die Öffnung (78) radial so bemessen ist, dass um eine Außenseite (92) der Ringspaltdüse (90) herum ein Blasspalt (94) ausgebildet, über den Prozessluft (106) längs der Außenseite (92) der Ringspaltdüse (90) zu deren Mündung (100) führbar ist.

8. Vorrichtung nach einem der Ansprüche 1 bis 7, **dadurch gekennzeichnet, dass** der Ventilator (50) mit einem Antrieb (60) verbunden ist, der den Ventilator (50) um die Hochachse (32) dreht.

9. Vorrichtung nach Anspruch 8, **dadurch gekennzeichnet, dass** der Antrieb aus einer gezielten Prozessluftführung an die an der Unterseite des Ventilatorblattes angeordneten Ventilatorschaufeln (66) ausgebildet ist.

10. Vorrichtung nach einem der Ansprüche 1 bis 9, **dadurch gekennzeichnet, dass** der Ventilator (50) ein zweites, oberes Ventilatorblatt (74) aufweist.

11. Vorrichtung nach Anspruch 10, **dadurch gekennzeichnet, dass** zwischen dem zweiten, oberen Ventilatorblatt (74) und dem darunter angeordneten, primären Ventilatorblatt (52) ein in Richtung der Wand (38) öffnender Spalt (82) vorhanden ist, in den Prozessluft (106) einführbar ist.

12. Vorrichtung nach Anspruch 10 oder 11, **dadurch gekennzeichnet, dass** das zweite, obere Ventilatorblatt (74) drehbar im primären Ventilatorblatt (52) gelagert ist.

13. Vorrichtung nach einem der Ansprüche 10 bis 12, **dadurch gekennzeichnet, dass** eine Drehgeschwindigkeit des zweiten Ventilatorblattes (74) unabhängig von der Drehgeschwindigkeit des primären Ventilatorblattes (52) einstellbar ist.

14. Vorrichtung nach einem der Ansprüche 1 bis 13, **dadurch gekennzeichnet, dass** das jeweils oberste Ventilatorblatt (124, 154) zumindest eine umfänglich verlaufende, radial gerichtete Spaltöffnung (138) aufweist.

15. Vorrichtung nach Anspruch 14, **dadurch gekennzeichnet, dass** die Spaltöffnung (138) durch sich überlappende Blattabschnitte (130, 132; 156, 158) des jeweils obersten Ventilatorblattes (124, 154) des Ventilators (120, 150) ausgebildet ist.

## Claims

1. Device for treating a particulate material (44), having an upright container (12) which comprises a process chamber (46), in which is arranged a bottom (42) rotatable about a vertical axis (32), wherein process air (106) may be introduced into the process chamber (46) between an outer circumference of the rotatable bottom (42) and the wall (38) of the container (12) which surrounds the bottom, and having a nozzle in order to spray a treatment medium onto the material (44) which has been set in motion in the process chamber (46), **characterized in that** the bottom (42) is constructed as a blower (50, 120, 140, 150) which has a primary blower blade (52, 142, 154) facing the process chamber (46), on the underside of which blower blade are arranged blower vanes (66), and **in that** the nozzle is constructed as an upright radially spraying annular gap nozzle (90) located centrally in the vertical axis (32), wherein an orifice (100) of the annular gap nozzle (90) is positioned somewhat above the level of an in each case upper most blower blade.

2. Device of claim 1, **characterized in that** each blower blade (52, 74, 124, 142, 154), viewed radially outwards from the central axis (32), is initially downwardly inclined.

3. Device of claims 1 or 2, **characterized in that** each blower blade (52, 74, 124, 142, 154) is of rising construction in the region of the wall (38) of the container (12).

4. Device of anyone of claims 1 - 3, **characterized in that** the wall (38) of the container (12) has an upwardly rising curvature at the level of the blower (50, 120, 140, 150).

5. Device of claim 4, **characterized in that** the curved container wall (38) extends radially inwards beneath the blower (50, 120, 140, 150).

6. Device of anyone of claims 1 - 5, **characterized in that** the blower (50, 120, 140, 150) comprises a central, downwardly projecting stem (54, 142) which comprises a central opening (78) in which the annular gap nozzle (90) is accommodated.

7. Device of claim 6, **characterized in that** the opening (28) is radially dimensioned such that a blowing gap (94) is formed around the outside (92) of the annular gap nozzle (90), via which blowing gap process air (106) may be guided along the outside (92) of the annular gap nozzle (90) up to the orifice (100) thereof.

8. Device of anyone of claims 1 - 7, **characterized in that** the blower (50) is connected to a drive (60) which rotates the blower (50) about the vertical axis (32).

9. Device of claim 8, **characterized in that** the drive consist of directed guidance of process air onto the underside of blower vanes (66) arranged on the blower blade.

10. Device of anyone of claims 1 - 9, **characterized in that** the blower (50) comprises a second, upper blower blade (74).

11. Device of claim 10, **characterized in that**, between the second, upper blower blade (74) and the primary blower blade (52) arranged there beneath, there is a gap (82) which opens towards the wall (38), into which gap the process air (106) may be introduced.

12. Device of claims 10 or 11, **characterized in that** the second, upper blower blade (74) is rotatable mounted on the primary blower blade (52).

13. Device of anyone of claims 10 - 12, **characterized in that** a speed of rotation of the second blower blade (74) may be adjusted independently of the speed of rotation of the primary blower blade (52).

14. Device of anyone of claims 1 - 13, **characterized in that** the in each case uppermost blower blade (124, 154) comprises at least one radially directed gap opening (138) which extends circumferentially.

15. Device of claim 14, **characterized in that** the gap opening (138) is formed by over lapping blade portions (130, 132; 156, 158) of the in each case uppermost blower blade (124, 154) of the blower (120, 150).

## Revendications

1. Dispositif destiné au traitement d'un produit (44) sous forme de particules, avec un récipient (12) en position verticale qui présente une chambre de traitement (46) dans laquelle est disposé un fond (42) rotatif autour d'un axe vertical (32), sachant que de l'air de traitement (106) peut être introduit dans la chambre de traitement (46) entre une périphérie extérieure du fond rotatif (42) et la paroi (38) du récipient (12) qui entoure cette périphérie, et avec une buse pour pulvériser un fluide de traitement sur du produit (44) en mouvement dans la chambre de traitement (46), **caractérisé en ce que** le fond (42) est réalisé sous la forme d'un ventilateur (50, 120, 140, 150) qui présente une pale de ventilateur primaire (52, 142, 154) tournée vers la chambre de traitement (46), des ailettes de ventilateur (66) étant disposées sur la face inférieure de cette pale, et **en ce que** la buse est réalisée sous la forme d'une buse à fente annulaire (90) qui est placée au centre de l'axe vertical (32) et qui pulvérise radialement, sachant qu'une embouchure (100) de la buse à fente annulaire (90) vient se placer un peu au-dessus de la hauteur d'une pale de ventilateur respectivement la plus haute.

2. Dispositif selon la revendication 1, **caractérisé en ce que** chaque pale de ventilateur (52, 74, 124, 142, 154) s'étend, considéré radialement vers l'extérieur depuis l'axe vertical central (32), initialement en inclinaison vers le bas.

3. Dispositif selon la revendication 1 ou 2, **caractérisé en ce que** chaque pale de ventilateur (52, 74, 124, 142, 154) est réalisée à pente ascendante dans la région de la paroi (38) du récipient (12).

4. Dispositif selon l'une des revendications 1 à 3, **caractérisé en ce que** la paroi (38) du récipient (12) s'étend avec une courbure ascendante vers le haut à hauteur du ventilateur (50, 120, 140, 150).

5. Dispositif selon la revendication 4, **caractérisé en ce que** la paroi de récipient incurvée (38) s'étend radialement vers l'intérieur en dessous du ventilateur (50, 120, 140, 150).

6. Dispositif selon l'une des revendications 1 à 5, **caractérisé en ce que** le ventilateur (50, 120, 140, 150) présente un corps (54, 152) qui fait saillie centralement vers le bas et qui présente une ouverture centrale (78) dans laquelle est reçue la buse à fente annulaire (90).

7. Dispositif selon la revendication 6, **caractérisé en ce que** l'ouverture (78) est dimensionnée radialement de telle sorte qu'une fente d'insufflation (94) est formée tout autour d'un côté extérieur (92) de la buse à fente annulaire (90), fente par l'intermédiaire de laquelle l'air de traitement (106) peut être dirigé le long du côté extérieur (92) de la buse à fente annulaire (90) jusqu'à l'embouchure (100) de celle-ci.

8. Dispositif selon l'une des revendications 1 à 7, **caractérisé en ce que** le ventilateur (50) est relié à un entraînement (60) qui fait tourner le ventilateur (50) autour de l'axe vertical (32)

9. Dispositif selon la revendication 8, **caractérisé en ce que** l'entraînement consiste en une conduite ciblée de l'air de traitement sur les ailettes de ventilateur (66) disposées sur la face inférieure de la pale de ventilateur.

10. Dispositif selon l'une des revendications 1 à 9, **caractérisé en ce que** le ventilateur (50) présente une deuxième pale de ventilateur (74), supérieure.

11. Dispositif selon la revendication 10, **caractérisé en ce qu'**une fente (82), s'ouvrant en direction de la paroi (38) et dans laquelle de l'air de traitement (106) peut être introduit, est présente entre la deuxième pale de ventilateur (74), supérieure et la pale de ventilateur primaire (52) disposée en dessous.

12. Dispositif selon la revendication 10 ou 11, **caractérisé en ce que** la deuxième pale de ventilateur (74), supérieure est montée à rotation dans la pale de ventilateur primaire (52).

13. Dispositif selon l'une des revendications 10 à 12, **caractérisé en ce qu'**une vitesse de rotation de la deuxième pale de ventilateur (74) peut être réglée indépendamment de la vitesse de rotation de la pale de ventilateur primaire (52).

14. Dispositif selon l'une des revendications 1 à 13, **caractérisé en ce que** la pale de ventilateur respectivement la plus haute (124, 154) présente au moins une ouverture en forme de fente (138) s'étendant périphériquement et dirigée radialement.

15. Dispositif selon la revendication 14, **caractérisé en ce que** l'ouverture en forme de fente (138) est formée par des parties de pale (130, 132 ; 156, 158) de la pale de ventilateur respectivement la plus haute (124, 154) du ventilateur (120, 150).
